# EUROPEAN PATENT APPLICATION

(11) **EP 2 631 782 A1**
(43) Date of publication of application: **28.08.2013**
(21) Application number: 12156964.4
(22) Date of filing: 24.02.2012
(51) Int. Cl.: G06F 3/14, G09G 5/12, G09G 5/00, G09G 5/14

(54) **Device, system and method for generating display data**

(71) Applicant: Research In Motion Limited, Waterloo, ON N2L 3W8 (CA)
(72) Inventor: Eriksson, Marcus, Malmo, 211 40 (SE); Berglund, Carl Fredrik Alexander, Malmo, 211 40 (SE)
(74) Representative: Carpmaels & Ransford LLP

(57) **Abstract**

A device for generating display data comprises memory configured to store application data defining one or more display objects; an input interface configured to receive input; and a processor in communication with the memory and input interface and configured to output display data in accordance with the input. The processor is further configured to modify the application data according to a predetermined code to symbolise an operating status of the device in the display data; and to generate the display data including components which are representative of the display objects defined by the modified application data before outputting the display data.

## Description

### Technical Field

The embodiments disclosed herein relate to a device, system and method for generating display data.

### Background

Electronic devices are increasingly being used to generate a presentation, and are subsequently used by an individual (i.e. a presenter) to display a presentation and related data to other individuals, for example a portable electronic device may be used by a presenter to cause a presentation to be displayed on a display device, for example on a display screen such as a liquid crystal or plasma display device, or on a projection screen via a projector.

A presenter will typically make a presentation by using the electronic device to cause a plurality of "slides" to be displayed in a predetermined order. Each slide is generally a discrete still frame containing data and information which is displayed on the display device for a period of time. The data and information may be presented within the slide as one or more of: text, in an image, in a video, or as other graphics.

Efforts are on-going to increase the efficiency and usability of electronic devices for generating and displaying presentations.

### Brief Description of the Drawings

The present disclosure and the embodiments set out herein can be better understood with reference to the description of the embodiments set out below, in conjunction with the appended drawings which are:
Figure 1 is a schematic diagram illustrating components of an exemplary electronic device usable by a user in some embodiments;
Figure 2 is a plan view of the upper external side of one exemplary electronic device usable by an end-user in some embodiments;
Figure 3 is a plan view of the upper external side of one alternative exemplary electronic device usable by an end-user in some embodiments;
Figure 4 is a schematic diagram of an exemplary system in which the aforementioned electronic devices can be employed in some exemplary embodiments;
Figure 5 is a screenshot based on application data which may be modified to symbolise an operating status of an electronic device;
Figure 6 is a flow chart showing a method for generating display data; and
Figure 7 is a flow chart showing another method for generating display data.

### Detailed Description

In a first aspect, there is provided a device for generating display data. The device comprises memory configured to store application data defining one or more display objects; an input interface configured to receive input; and a processor in communication with the memory and input interface and configured to output display data in accordance with the input. The processor is further configured to modify the application data according to a predetermined code to symbolise an operating status of the device in the display data; and to generate the display data including components which are representative of the display objects defined by the modified application data before outputting the display data.

In one example, the brightness or colour of a presentation could be adjusted to give an indication of the time spent discussing a particular slide, chapter or as an indication of the time remaining for the presentation as a whole.

In another example, indicators could be provided to show the user the result of the next interaction, i.e. to show one colour if the next tap results in another bullet point or to show another colour if the next tap results in the next slide. This gives the user an unobtrusive indication as to what to expect and will remove the possibility of accidentally moving on to a slide when the presenter is not ready.

Further indicators could be used to provide the user with an indication of any incoming communications. Rules can be defined that stipulate VIPs or important types of communication so that the user will see a perceptual change in the display (i.e. a number of dots relating to a number of urgent messages) which will not detract from the content being presented. In one example, the rules may state that a VIP is to be identified if calendar application data indicates that the sender is invited to a meeting that takes place at the same time as the presentation. In another example, the rules may also state that a VIP is to be identified if contact book data identifies the sender as being a favourite contact. Alternatively, people may be manually identified as being VIPs using the application. Important communications could be identified if the subject is connected to the presentation. For example, the first slide of the presentation may say "If you want your questions to reach the presenter, please use #presentation 001 in your subject line".

The symbolisation may be useful regardless of whether or not two or more displays are mirrored (for example, local and remote displays). If the displays are mirrored, there is no way to reach the presenter privately since all content on the screen will be publicly shown. Symbolising the operating status in the display allows the presenter to understand the message, while the audience will not understand. If the displays are not mirrored, one display (e.g. a handheld screen) may show private data, while the other display (e.g. a projected display) may show public data. However, in certain circumstances, it might not be possible for the presenter to pay continuous attention to the handheld screen, for example if the handheld screen needs to be plugged in or physically placed in a location where it is not visible to the presenter, or if there is more than one presenter and not all of them can see the handheld screen, but they can at all times see the other display.

By "application data" it is meant data created for or by a software application, for example a presentation application such as Blackberry® Presenter, Slideshow To Go, or Microsoft® PowerPoint®, with the application data perhaps being in the form of a file configured for use by that application, for example a PowerPoint® file. The application data may be static application data, i.e. data which is fixed unless altered by a user, as opposed to data which is continually changing, and which is changed by the system, e.g. the system time provided by a system clock. In particular, "static" application data may be defined as any application data which is independent of the operating status of the device.

By "display object" it is meant an object to be displayed on screen under the control of the application, for example a presentation application. Thus, where the application is a presentation application, a "display object" may include a slide, text, an image, a bullet point, or a background element, for example, or a number of these elements grouped together as an object.

By "display data" is meant data which is output by the processor in a form which can be understood and used by a display device to put or render the display objects on screen.

By "predetermined code", it is meant any arrangement or system whereby a human being viewing the display would be able to interpret the information presented symbolically on a display, whereas another human being having no knowledge of the code would not be able to interpret the information. The arrangement or system may be a standard one for the presentation application, or it may be set by the user.

By "symbolise", it is meant that what is displayed includes something (a particular colour, a level of brightness, or a dot, for example) which stands for something else (for example the amount of time spent or remaining, what comes next in a presentation, or an indication of the number of incoming messages). In one example, a display object presented on screen may have a primary meaning or purpose, for example it may be a portion of text, a bullet point or a decorative element, which is modified (for example by varying its colour or brightness) to attach a secondary meaning to it.

By "operating status" of the device it is meant a condition prevailing in the device, for example a battery level, a time status, a level of incoming signalling, a next action (in a sequence of actions, for example those defined by the application data), or data from other applications in the form of notifications, such as from the calendar application, perhaps relating to an upcoming meeting that is about to start. These aspects will be discussed in more detail below.

As will become apparent, the application data may be modified following its creation to symbolise the operating status of the device, or it may be set upon creation to symbolise the operating status. Furthermore, the modification of the application data may result in the modification of an existing display object defined by the application data, or the definition of a new display object to form part of the application data.

The processor may be configured to communicate with a status report subsystem or module to receive an indicator of the operating status of the device.

The status report subsystem or module may be any subsystem or module which is configured to provide the indicator of the operating status. For example, the status report subsystem may comprise a battery interface configured to provide an indicator of the level of charge remaining in a battery for powering the device. Additionally or alternatively, the status report subsystem may comprise a clock subsystem configured to provide an indicator of time, e.g. a system time, which may be the current time. Additionally or alternatively, the status report subsystem may comprise a communication subsystem configured to provide an indicator of the number of incoming messages being received by the device.

Modification of the application data could include one or more of the alteration of an existing display object, the addition of a new display object, or the removal of an existing display object, to symbolise the operating status, as will be discussed in more detail below.

The processor may be configured to repeat a process of receiving the indicator from the status report subsystem, modifying the application data, and outputting the display data, so as to provide an up-to-date symbolisation of the operating status in the display data. By "up-to-date" is meant an operating status which may be real time, or which may reflect the operating status over a predetermined time period, e.g. a generalisation of the operating status over the previous ten minutes, or a snapshot of the operating status from ten minutes ago.

Each display object may have one or more visual parameters associated with it. The visual parameters may comprise one or more of a brightness, colour, contrast, opacity, frequency, amplitude, speed of the associated display object, or the number or thickness of a plurality of lines (e.g. hatching) of the associated display object, for example.

The processor may be configured to symbolise the operating status of the device in the display data by modifying, according to the predetermined code, that application data which relates to one or more of the visual parameters associated with at least part of one or more of the display objects. For example, the brightness or colour of a display object could be adjusted to give an indication of the operating status. The adjustment could be made to the visual parameter (e.g. brightness, colour) over the whole of the display object, or one or more parts of the display object, or over the whole or part of a number of display objects grouped together. In one example, according to the predetermined code, the object may be modified to become brighter to symbolise the amount of time remaining in a presentation. In another example, the object may change colour, e.g. from red to blue, to symbolise a particular amount of time (e.g. five minutes) remaining in the presentation.

The processor may be configured to modify the application data to symbolise an amount of time which has elapsed since a preselected start point during the operation of the device, or an amount of time which is remaining until a preselected end point during the operation of the device. The preselected start point may coincide with a first display of a predetermined one of the display objects defined by the application data, such that the preselected start point may indicate the starting time of a presentation, for example. The "first display of a predetermined one of the display objects" may be the first time that an opening slide of the presentation is displayed, for example, or the first time that a slide or object which is designated as the starting point is displayed (e.g. the second slide, if the first slide is a title slide). The preselected end point may coincide with a final display of a predetermined one of the display objects defined by the application data, such that the preselected end point may indicate the ending time of a presentation, for example. Thus, the "final display of a predetermined one of the display objects" may be the display of the closing slide of a presentation, for example.

The modification may symbolise the amount of time by, as mentioned above, adjusting a visual parameter (e.g. brightness, colour) of a designated object over the course of the operation of the device (e.g. the giving of a presentation). The modification may be performed continuously or in a stepwise manner. For example, the colour of an object may change progressively from red to blue as time elapses during the presentation, or the colour may change in a stepwise manner to indicate that five minutes, ten minutes, fifteen minutes have elapsed (or are remaining).

The processor may be configured to calculate an estimated amount of time which is remaining until the preselected end point based on one or more of (i) calendar application data stored in the memory; (ii) the amount of time which has elapsed since the preselected start point and a predetermined duration; (iii) the number of display objects defined by the application data which are yet to be displayed, and a time estimate for the display of each display object; or (iv) the number of display objects defined by the application data which are yet to be displayed, and a record stored in memory of an amount of time spent on one or more previously-displayed display objects.

The estimation based on calendar data could be performed by checking the data in the calendar application, and if there is a meeting booked that starts within a certain threshold from the presentation start, this could be taken as the intended duration of the presentation.

The duration of the presentation could be stated by the user when creating the presentation or just before the presentation is held. If the duration of the presentation is manually stated when launching the presentation, the same presentation may be given multiple times with alternative durations depending on the context of the presentation. Although the duration of the presentation may be manually input using any device, it is preferably input using a controlling device which does not result in the output being displayed publicly.

The estimated amount of time could also be calculated by looking at the total amount of slides and updating the estimation depending on the amount of time spent on each slide. For example, if there are ten slides and one minute is spent on the first, the expectation for the whole presentation is (10 slides * 1 minute) = 10 minutes. However, if 5 minutes were then spent on slide 2, and 5 minutes on slide 3, the new calculation would be 1+5+5 + (estimation 5+5+5+5+5+5+5) = 46 minutes. In a further example, the estimated amount of time could be calculated by looking at the number of slides and updating the estimation based on a running average for the amount of time spent per slide. Thus, in the case in which there are ten slides and one minute is spent on the first slide, 5 minutes on slide 2, and 5 minutes on slide 3, the estimated total amount of time would be 1+5+5 + (((1+5+5)/3)*7) = 36 minutes 40 seconds.

The history could also be stored to make better assumptions on future presentation based on previous presentations. So it could be known that a user always speeds through the first two and last two slides, and this could be taken into account.

Symbolising the total expected slideshow duration in the display data could be achieved by modifying the parameters of the application data on a 10-minute basis, for example, meaning that it is only shown how far it is until the next 10 minute mark (e.g. a countdown to the 10 minute mark), and how many 10 minute marks are expected, in the form of dots for example.

In the case in which the device comprises a clock subsystem or module, the processor may be configured to communicate with the clock subsystem to receive an indicator of a current time value, whereby the processor calculates the amount of time which has elapsed since the preselected start point, or the amount of time which is remaining until the preselected end point.

In another example, the device comprises a communication subsystem, and the processor is configured to communicate with the communication subsystem to receive an indicator of the number of incoming messages.

In another example, the processor may be configured to modify the application data to symbolise in the display data a next action to be performed by the device. The next action may be to display a display object, with the processor being configured to modify the application data to symbolise a type of display object which is to be displayed next, according to the application data. Types of display objects may include presentation objects, such as slides, bullet points, text boxes or passages of text, images, and so on.

Additionally or alternatively to modifying an existing display object, the processor may be configured to modify the application data to define one or more further display objects which symbolise the operating status of the device in the display data, according to the predetermined code. Furthermore, the processor may be configured to modify the application data to symbolise a number of incoming messages received by the device. For example, the processor may be configured to introduce dots or other symbolic representations to indicate the number of messages being received by the communication subsystem. The incoming messages may be emails, messages received via a social networking website, SMS (short message service) messages, or telephone calls, for example. Thus, there may be provided an abstract representation of the amount of messages (which be based on a unified inbox comprising notifications of social networking data or even phone calls) received during the presentation.

In a further example, the device comprises a battery, and the processor is configured to modify the application data to symbolise a level of remaining charge in the battery.

The processor may be configured to generate and output second display data in accordance with the (user) input. The processor may be configured to generate and output the first and second display data at the same time. The first and second display data may be different, or the first and second display data may comprise components which are common to each other. The device may comprise a local display device, including a display screen, in communication with the processor, wherein the local display device is configured to receive the first display data and generate a visual representation of the display data on the display screen. The local display device may be connected to the processor via a display bus. The local display device may comprise display memory for receiving and buffering the display data from the processor. The processor may be configured to communicate with a remote display device which generates a visual representation of the second display data on a display screen.

In a second aspect, there is provided a system comprising the device of the first aspect, and a display device configured to receive the display data from the processor and generate a visual representation of the display data on a display screen.

The display device may be a local display device. The system may further comprise a remote display device configured to receive second display data from the processor and generate a visual representation of the second display data on a display screen. The remote display device may be connected to the processor via a wired connection. Additionally or alternatively, the remote display device may be in communication with the processor via a wireless communications path. The remote display device may comprise display memory for receiving and buffering the second display data from the processor.

In a third aspect, there is provided a method for generating display data. The method comprises storing application data in a memory, the application data defining one or more display objects; and receiving input via an input interface. A processor in communication with the memory and input interface is operated to modify the application data according to a predetermined code to symbolise an operating status of the device in display data. The processor generates the display data including components which are representative of the display objects defined by the modified application data, and outputs the display data in accordance with the input.

In a fourth aspect, there is provided a computer program product comprising memory storing computer-executable instructions which, when executed by a processor, cause the processor to perform the method of the third aspect.

In a fifth aspect, there is provided a device for generating display data. The device comprises memory configured to store application data defining one or more display objects; an input interface configured to receive input; and a processor in communication with the memory and input interface configured to output display data in accordance with the input. The processor is further configured to generate the display data including components which are representative of the display objects defined by the application data before outputting the display data. The application data is set according to a predetermined code to symbolise the operating status of the device in the display data.

Each display object may have one or more associated visual parameters, and wherein that application data which relates to one or more of the visual parameters associated with at least part of one or more of the display objects is set according to the predetermined code to symbolise the operating status.

The application data may be set according to the predetermined code to symbolise in the display data a next action to be performed by the device. For example, the application data may be set according to the predetermined code to symbolise in the display data a type of display object which is to be displayed next, according to the application data.

In a sixth aspect, there is provided a system comprising the device of the fifth aspect; and a display device configured to receive the display data from the processor and generate a visual representation of the display data on a display screen.

In a seventh aspect, there is provided a method for generating display data. The method comprises storing application data in a memory, the application data defining one or more display objects, and receiving input via an input interface. A processor in communication with the memory and input interface is operated to generate display data including components which are representative of the display objects defined by the application data. The application data is set according to a predetermined code to symbolise the operating status of the device in the display data. The processor outputs the display data in accordance with the input.

In an eighth aspect, there is provided a computer program product comprising memory storing computer-executable instructions which, when executed by a processor, cause the processor to perform the method of the seventh aspect.

This disclosure below is a description of one or more exemplary embodiments which are not intended to be limiting on the scope of the appended claims.

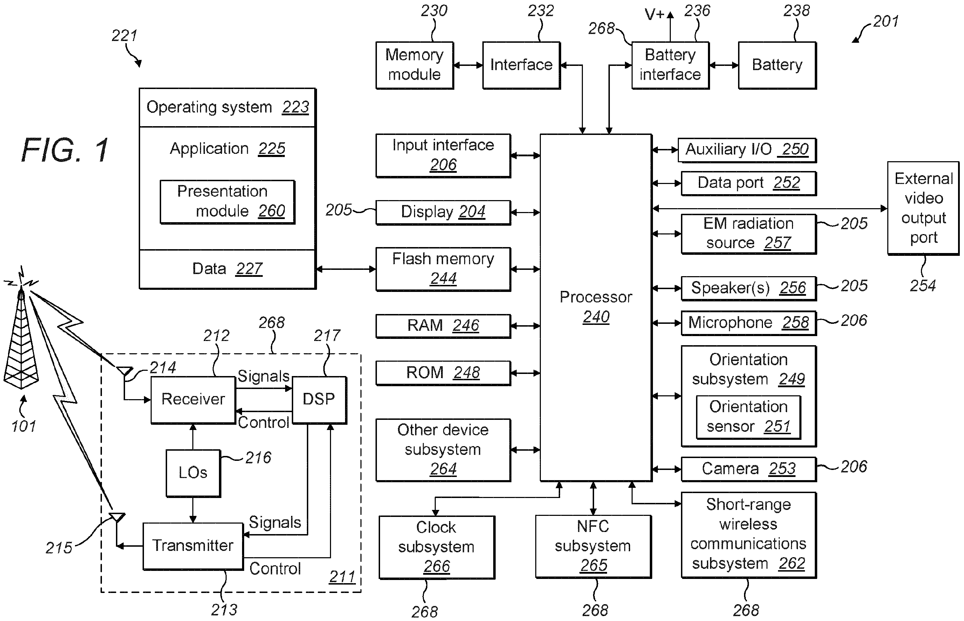

Reference is made to Figure 1 which illustrates an exemplary electronic device 201 which is usable in accordance with the disclosure below. An electronic device 201 such as the electronic device 201 of Figure 1 is configured to generate a presentation and user-controllable interface on a built-in local display or on a remote, external display device, or on a built-in local display and on a remote, external display device. In the context of this disclosure, the term "remote" means a display screen which is not built-in to the electronic device 201 with which the electronic device 201 communicates via a physical wired connection or via a wireless connection. In the context of this disclosure, the term "presentation" means one or more frames containing one or more of: data, information and user-controllable components which are caused to be displayed successively on the display device by the electronic device.

It will be appreciated that, in other embodiments, some of the features, systems or subsystems of the electronic device 201 discussed below with reference to Figure 1 may be omitted from electronic devices 201 which are intended to perform solely operations in relation to the generation and display of presentations.

In the illustrated exemplary embodiment, the electronic device 201 is a communication device and, more particularly, is a mobile communication device having data and voice communication capabilities, and the capability to communicate with other computer systems; for example, via the Internet. It will be appreciated that the electronic device 201 may take other forms, including any one of the forms listed below. Depending on the functionality provided by the electronic device 201, in certain exemplary embodiments, the electronic device 201 is a multiple-mode communication device configured for both data and voice communication, a mobile telephone, such as a smartphone, a wearable computer such as a watch, a tablet computer, a personal digital assistant (PDA), or a computer system such as a notebook, laptop or desktop system. The electronic device 201 may take other forms apart from those specifically listed above. The electronic device may also be referred to as a mobile communications device, a communication device, a mobile device and, in some cases, as a device. In the context of this disclosure, the term "mobile" means the device is of a size or weight which makes it readily portable by a single individual, e.g. of a weight less than 5, 4, 3, 2, 1, 0.5, 0.4, 0.3, 0.2 or 0.1 kilograms, or of a volume less than 15,000, 10,000, 5,000, 4,000, 3,000, 2,000, 1,000, 500, 400, 300, 200, 100, 90, 80, 70, 60, 50, 40, 30 ,20, 10 or 5 cubic centimetres. As such, the device may be portable in a bag, or clothing pocket.

The electronic device 201 includes a controller including a processor 240 (such as a microprocessor) which controls the operation of the electronic device 201. In certain electronic devices, more than one processor is provided, with each processor in communication with each other and configured to perform operations in parallel, so that they together control the overall operation of the electronic device. The processor 240 interacts with device subsystems, such as a wireless communication subsystem 211 for exchanging radio frequency signals with a wireless network 101 to perform communication functions. The processor 240 is communicably coupled with additional device subsystems including one or more output interfaces 205 (such as one or more of: a local display 204, a speaker 256, electromagnetic (EM) radiation source 257), one or more input interfaces 206 (such as one or more of: a camera 253, microphone 258, keyboard (not shown), control buttons (not shown), a navigational input device (not shown), a touch-sensitive overlay (not shown)) associated with a touchscreen 204, an orientation subsystem 249, memory (such as flash memory 244, random access memory (RAM) 246, read only memory (ROM) 248, etc.), auxiliary input/output (I/O) subsystems 250, a data port 252 (which may be a serial data port, such as a Universal Serial Bus (USB) data port), an external video output port 254, a near field communications (NFC) subsystem 265, a short-range communication subsystem 262, a clock subsystem 266, a battery interface 236, and other device subsystems generally designated as 264. Some of the subsystems shown in Figure 1 perform communication-related functions, whereas other subsystems may provide "resident" or on-device functions.

The electronic device 201 stores data 227 in an erasable persistent memory, which in one exemplary embodiment is the flash memory 244. In various exemplary embodiments, the data 227 includes service data including information used by the electronic device 201 to establish and maintain communication with the wireless network 101. The data 227 may also include user application data such as email messages, address book and contact information, calendar and schedule information, notepad documents, presentation documents and information, word processor documents and information, spread sheet documents and information; desktop publishing documents and information, database files and information; image files, video files, audio files, internet web pages, and other commonly stored user information stored on the electronic device 201 by its user, and other data. The data may also include program application data such as functions, controls and interfaces from an application such as an email application, an address book application, a calendar application, a notepad application, a presentation application, a word processor application, a spread sheet application, a desktop publishing application, a database application, a media application such as a picture viewer, a video player or an audio player, and a web browser. The data 227 stored in the persistent memory (e.g. flash memory 244) of the electronic device 201 may be organized, at least partially, into one or more databases or data stores. The databases or data stores may contain data items of the same data type or associated with the same application. For example, email messages, contact records, and task items may be stored in individual databases within the device memory.

The electronic device 201 includes a clock subsystem or module 266 comprising a system clock configured to measure system time. In one example, the system clock comprises its own alternate power source. The system clock provides an indicator of a current time value, the system time, represented as a year/month/day/hour/minute/second/milliseconds value. In other examples, the clock subsystem 266 additionally or alternatively provides an indicator of the current time value represented as a count of the number of ticks of known duration since a particular epoch.

The clock subsystem 266, the communication subsystem 211, the NFC subsystem, 265, the short-range wireless communications subsystem 262, and the battery interface 236 together form a status report subsystem 268 which is configured to provide an indicator of the operating status of the device.

The local display 204 receives local display data generated by the processor 240, such that the local display 204 displays certain application data stored as a segment of the data 227 from the memory (any of the flash memory 244, random access memory (RAM) 246, read only memory (ROM) 248) in a predetermined way on local display screen (not shown) of the display 204, according to the processing performed by the processor 240.

In certain exemplary embodiments, the external video output port 254 is integrated with the data port 252. The external video output port 254 is configured to connect the electronic device 201 via a wired connection (e.g. video graphics array (VGA), digital visual interface (DVI) or high definition multimedia interface (HDMI)) to an external (or remote) display device 290 which is separate and remote from the electronic device 201 and its local display 204. The processor 240 outputs external display data generated by the processor 240 via the external video output port 254, such that the external display device 290 can display application data from the memory module in a predetermined way on an external display screen (not shown) of the external display device 290. The processor 240 may also communicate the external display data to the external display device 290 in a similar fashion over a wireless communications path (see below).

At any given time, the local display data and the external display data generated by the processor 240 may be identical or similar for a predetermined period of time, but may also differ for a predetermined period of time, with the processor 240 controlling whether the local display data and the external display data are identical or differ based on input from one or more of the input interfaces 206. In this context, the word "identical" means that both sets of data comprise similar content so as to generate an identical or substantially similar display at substantially the same time on both the external display device 290 and the local display 204. In this context, the word "differ" means that the external display data and local display data are not identical; this is to say that these data may (but not necessarily) include identical elements of data, for example representative of the same application data, but the external display data and local display data are not wholly identical. Hence, the display on both the external display device 290 and the local display 204 is not wholly identical, although similar or identical individual items of content based on the application data may be displayed on both the external display device 290 and the local display 204.

In at least some exemplary embodiments, the electronic device 201 includes a touchscreen which acts as both an input interface 206 (i.e. touch- sensitive overlay) and an output interface 205 (i.e. display). The touchscreen may be constructed using a touch-sensitive input surface which is connected to an electronic controller and which overlays the local display 204. The touch-sensitive overlay and the electronic controller provide a touch-sensitive input interface 206 and the processor 240 interacts with the touch-sensitive overlay via the electronic controller. In at least some exemplary embodiments, the touch-sensitive overlay has a touch-sensitive input surface which is larger than the local display 204. For example, in at least some exemplary embodiments, the touch-sensitive overlay may extend overtop of a frame (not shown) which surrounds the local display 204. In such exemplary embodiments, the frame (not shown) may be referred to as an active frame since it is capable of acting as an input interface 206. In at least some exemplary embodiments, the touch-sensitive overlay may extend to the sides of the electronic device 201.

As noted above, in some exemplary embodiments, the electronic device 201 includes a communication subsystem 211 which allows the electronic device 201 to communicate over a wireless network 101. The communication subsystem 211 includes a receiver 212, a transmitter 213, and associated components, such as one or more antenna elements 214 and 215, local oscillators (LOs) 216, and a processing module such as a digital signal processor (DSP) 217 which is in communication with the processor 240. The antenna elements 214 and 215 may be embedded or internal to the electronic device 201 and a single antenna may be shared by both receiver and transmitter. The particular design of the wireless communication subsystem 211 depends on the wireless network 101 in which electronic device 201 is intended to operate.

As mentioned above, the processor 240 can communicate the external display data to the external display device 290 wirelessly. In such an embodiment, the processor 240 transmits the external display data to the DSP 217 in the communication subsystem 211. The transmitter 213 receives the external display data from the DSP 217 and transmits it to the external display device 290 which contains a receiver (not shown). In this context, the external display data may be transmitted in packets over the wireless network 101 to the external display device 290, which resides on the wireless network 101, according to a wireless network standard, such as IEEE 802.11. Alternatively, the external display data may be wirelessly transmitted directly to the receiver in the external display device 290.

In at least some exemplary embodiments, the electronic device 201 communicates with any one of a plurality of fixed transceiver base stations of the wireless network 101 within its geographic coverage area. The electronic device 201 may send and receive communication signals over the wireless network 101 after the required network registration or activation procedures have been completed. Signals received by the antenna 214 through the wireless network 101 are input to the receiver 212, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 217. In a similar manner, signals to be transmitted are processed, including modulation and encoding, for example, by the DSP 217. These DSP-processed signals are input to the transmitter 213 for digital-to-analog (D/A) conversion, frequency up conversion, filtering, amplification, and transmission to the wireless network 101 via the antenna 215. The DSP 217 not only processes communication signals, but may also provide for receiver and transmitter control. For example, the gains applied to communication signals in the receiver 212 and the transmitter 213 may be adaptively controlled through automatic gain control algorithms implemented in the DSP 217.

In some exemplary embodiments, the auxiliary input/output (I/O) subsystems 250 includes an external communication link or interface; for example, an Ethernet connection. The electronic device 201 may include other wireless communication interfaces for communicating with other types of wireless networks; for example, a wireless network such as an orthogonal frequency division multiplexed (OFDM) network. The auxiliary I/O subsystems 250 may include a vibrator for providing vibratory notifications in response to various events on the electronic device 201 such as receipt of an electronic communication or incoming phone call, or for other purposes such as haptic feedback (touch feedback).

In some exemplary embodiments, the electronic device 201 also includes a removable memory module 230 (typically including flash memory, such as a removable memory card) and a memory interface 232. Network access may be associated with a subscriber or user of the electronic device 201 via the memory module 230, which may be a Subscriber Identity Module (SIM) card for use in a GSM network or other type of memory card for use in the relevant wireless network type. The memory module 230 is inserted in or connected to the memory card interface 232 of the electronic device 201 in order to operate in conjunction with the wireless network 101.

The data port 252 may be used for synchronization with a user's host computer system (not shown). The data port 252 enables a user to set preferences through an external device or software application and extends the capabilities of the electronic device 201 by providing for information or software downloads to the electronic device 201 other than through the wireless network 101. The alternate download path may for example, be used to load an encryption key onto the electronic device 201 through a direct, reliable and trusted connection to thereby provide secure device communication.

In at least some exemplary embodiments, the electronic device 201 also includes a device orientation subsystem 249 including at least one orientation sensor 251 which is connected to the processor 240 and which is controlled by one or a combination of a monitoring circuit and operating software. The orientation sensor 251 detects the orientation of the device 201 or information from which the orientation of the device 201 can be determined, such as acceleration. In some exemplary embodiments, the orientation sensor 251 is an accelerometer, such as a three-axis accelerometer. An accelerometer is a sensor which converts acceleration from motion (e.g. movement of the device 201 or a portion thereof due to the strike force) and gravity which are detected by a sensing element into an electrical signal (producing a corresponding change in output). Accelerometers may be available in one, two or three axis configurations. Higher order axis configurations are also possible. Accelerometers may produce digital or analog output signals depending on the type of accelerometer.

An orientation sensor 251 may generate orientation data which specifies the orientation of the electronic device 201. The orientation data, in at least some exemplary embodiments, specifies the orientation of the device 201 relative to the gravitational field of the earth.

In some exemplary embodiments, the orientation subsystem 249 includes other orientation sensors 251, instead of or in addition to accelerometers. For example, in various exemplary embodiments, the orientation subsystem 249 may include a gravity sensor, a gyroscope, a tilt sensor, an electronic compass or other suitable sensor, or combinations thereof. In some exemplary embodiments, the device orientation subsystem 249 may include two or more orientation sensors 251 such as an accelerometer and an electronic compass.

The electronic device 201, in at least some exemplary embodiments, includes a near field communications (NFC) subsystem 265. The NFC subsystem 265 is configured to communicate with other electronic devices 201 or tags, using an NFC communications protocol. NFC is a set of short-range wireless technologies which typically require a distance of 4 cm or less for communications. The NFC subsystem 265 may include an NFC chip and an NFC antenna.

The electronic device 201 includes a microphone or one or more speakers. In at least some exemplary embodiments, an electronic device 201 includes a plurality of speakers 256. For example, in some exemplary embodiments, the electronic device 201 includes two or more speakers 256. The two or more speakers 256 may, for example, be disposed in spaced relation to one another. That is, in at least some exemplary embodiments, the electronic device 201 may include a first speaker and a second speaker and the first speaker and the second speaker may be spatially separated from one another within the electronic device 201. In at least some exemplary embodiments, the local display 204 may be disposed between the first speaker and the second speaker of the electronic device. In such exemplary embodiments, the first speaker may be located at one side of the local display 204 and the second speaker may be located at another side of the display which is opposite the side of the display where the first speaker is located. For example, the first speaker may be disposed at a left side of the display and the second speaker may be disposed at a right side of the display.

In at least some exemplary embodiments, each speaker 256 is associated with a separate audio channel. The multiple speakers may, for example, be used to provide stereophonic sound (which may also be referred to as stereo).

The electronic device 201 may also include one or more cameras 253. The one or more cameras 253 may be capable of capturing images in the form of still photographs or motion video.

In at least some exemplary embodiments, the electronic device 201 includes a front facing camera 253. A front facing camera is a camera which is generally located on a front face of the electronic device 201. The front face is typically the face on which a local display 204 is mounted. That is, the local display 204 is configured to display content which may be viewed from a side of the electronic device 201 where the camera 253 is directed. The front facing camera 253 may be located anywhere on the front surface of the electronic device; for example, the camera 253 may be located above or below the local display 204. The camera 253 may be a fixed position camera which is not movable relative to the local display 204 of the electronic device 201 or the housing of the electronic device 201. In such exemplary embodiments, the direction of capture of the camera is always predictable relative to the local display 204 or the housing. In at least some exemplary embodiments, the camera may be provided in a central location relative to the local display 204 to facilitate image acquisition of a face.

In at least some exemplary embodiments, the electronic device 201 includes an electromagnetic (EM) radiation source 257. In at least some exemplary embodiments, the EM radiation source 257 is configured to emit electromagnetic radiation from the side of the electronic device which is associated with a camera 253 of that electronic device 201. For example, where the camera is a front facing camera 253, the electronic device 201 may be configured to emit electromagnetic radiation from the front face of the electronic device 201. That is, in at least some exemplary embodiments, the electromagnetic radiation source 257 is configured to emit radiation in a direction which may visible by the camera. That is, the camera 253 and the electromagnetic radiation source 257 may be disposed on the electronic device 201 so that electromagnetic radiation emitted by the electromagnetic radiation source 257 is visible in images obtained by the camera.

In some exemplary embodiments, the electromagnetic radiation source 257 is an infrared (IR) radiation source which is configured to emit infrared radiation. In at least some exemplary embodiments, the electromagnetic radiation source 257 may be configured to emit radiation which is not part of the visible spectrum. The camera 253 may be a camera which is configured to capture radiation of the type emitted by the electromagnetic radiation source 257. Accordingly, in at least some exemplary embodiments, the camera 253 is configured to capture at least some electromagnetic radiation which is not in the visible spectrum.

In some exemplary embodiments, the electronic device 201 is provided with a service routing application programming interface (API) which provides an application with the ability to route traffic through a serial data (i.e., USB) or Bluetooth® (Bluetooth® is a registered trademark of Bluetooth SIG, Inc.) connection to a host computer system using standard connectivity protocols. When a user connects their electronic device 201 to the host computer system via a USB cable or Bluetooth® connection, traffic that was destined for the wireless network 101 is automatically routed to the electronic device 201 using the USB cable or Bluetooth® connection. Similarly, any traffic destined for the wireless network 101 is automatically sent over the USB cable Bluetooth® connection to the host computer system for processing.

The electronic device 201 also includes a battery 238 as a power source, which is typically one or more rechargeable batteries that may be charged for example, through charging circuitry coupled to a battery interface 236 such as the data port 252. The battery 238 provides electrical power to at least some of the electrical circuitry in the electronic device 201, and the battery interface 236 provides a mechanical and electrical connection for the battery 238. The battery interface 236 is coupled to a regulator (not shown) which provides power V+ to the circuitry of the electronic device 201.

The electronic device 201 includes a short-range communication subsystem 262 which provides for wireless communication between the electronic device 201 and other electronic devices 201. In at least some exemplary embodiments, the short-range communication subsystem 262 is a wireless bus protocol compliant communication mechanism such as a Bluetooth® communication module to provide for communication with similarly-enabled systems and devices.

Any one or more of the communication subsystem 211, the NFC subsystem 265 and the short-range wireless communications subsystem 262 serves as a "communication subsystem" which is configured to provide an indicator of the number of incoming messages being received by the electronic device 201. The incoming messages may be emails, messages received via a social networking website, SMS (short message service) messages, or telephone calls, for example.

The electronic device 201 is, in some exemplary embodiments, a mobile communication device which may provide two principal modes of communication: a data communication mode and a voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email messaging application and output to the local display 204. A user of the electronic device 201 can compose data items, such as email messages; for example, using the input devices in conjunction with the local display 204. These composed items may be transmitted through the communication subsystem 211 over the wireless network 101.

In the voice communication mode, the electronic device 201 provides telephony functions and operates as a typical cellular phone. The overall operation is similar, except that the received signals would be output to the speaker 256 and signals for transmission would be generated by a transducer such as the microphone 258. The telephony functions are provided by a combination of software/firmware (i.e., a voice communication module) and hardware (i.e., the microphone 258, the speaker 256 and input interfaces 206). Alternative voice or audio I/O subsystems, such as a voice message recording subsystem, may also be implemented on the electronic device 201. Although voice or audio signal output is typically accomplished primarily through the speaker 256, the display screen 204 may also be used to provide an indication of the identity of a calling party, duration of a voice call, or other voice call related information.

The processor 240 operates under stored program control and executes software modules 221 stored in memory such as persistent memory; for example, in the flash memory 244. As illustrated in Figure 1, the software modules 221 include operating system software 223 and other software applications 225 such as presentation module 260. In the exemplary embodiment of Figure 1, the presentation module 260 is implemented as a stand-alone application 225. However, in other exemplary embodiments, the presentation module 260 could be implemented as part of the operating system 223 or other applications 225.

The memory is configured to store application data defining one or more display objects, as will be discussed further below.

The processor 240 is in communication with the memory and input interface and is configured to output display data in accordance with the input, to modify the application data according to a predetermined code to symbolise an operating status of the device in the display data, and to generate the display data including components which are representative of the display objects defined by the modified application data, before outputting the display data, as will be discussed in further detail below.

In one example, the software applications 225 stored in persistent memory include a presentation application 225, for example Microsoft® Powerpoint®.

The data 227 stored in the persistent memory (e.g. flash memory 244) of the electronic device 201 comprises application data, which for the presentation application includes presentation data, for example in the form of a Powerpoint® file. The application data 227 defines one or more display objects to be displayed on screen under the control of the application. Examples of display objects include slides, text, images, bullet points, background elements, or a number of these elements grouped together as a display object. Each display object has one or more visual parameters associated with it, which comprise one or more of brightness, colour, contrast, opacity, frequency, amplitude, speed, or the number or thickness of a plurality of lines (e.g. hatching).

As discussed above, electronic devices 201 which are configured to perform operations in relation to a communications log may take a variety of forms. In at least some exemplary embodiments, one or more of the electronic devices which are configured to perform operations in relation to the presentation module 260 are a smart phone or a tablet computer.

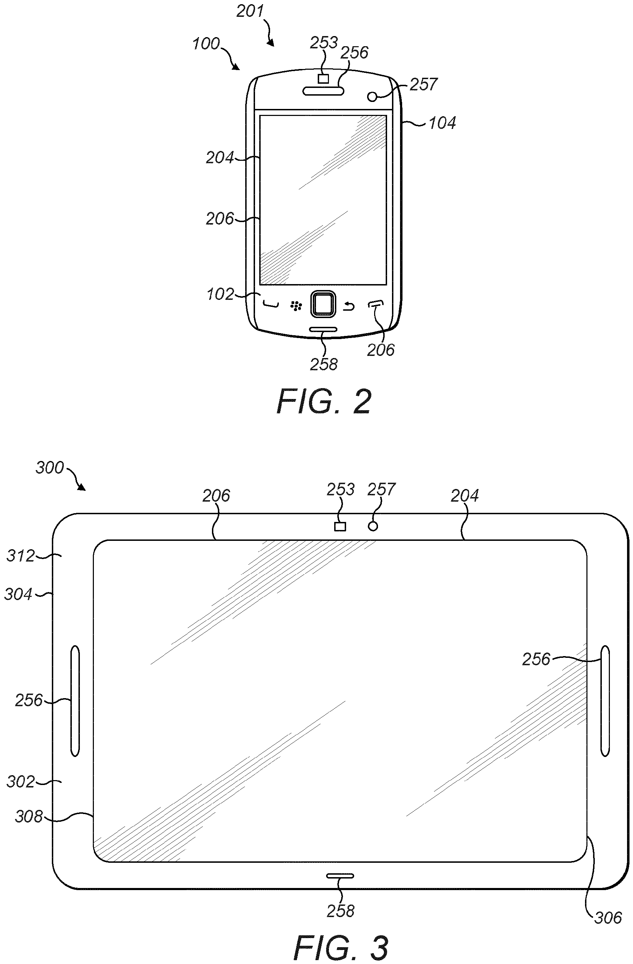

Referring now to Figure 2, a front view of an exemplary electronic device 201 which in one example may be a smartphone 100 is illustrated. The smartphone 100 is a mobile phone which offers more advanced computing capability than a basic non-smartphone cellular phone. For example, the smartphone 100 may have the ability to run third party applications which are stored on the smartphone.

The smartphone 100 includes all of the components discussed above with reference to Figure 1, or a subset of those components. The smartphone 100 includes a housing 104 which houses at least some of the components discussed above with reference to Figure 1.

In the exemplary embodiment, the smartphone includes a local display 204, which may be a touchscreen which acts as an input interface 206. The local display 204 is disposed within the smartphone 100 so that it is viewable at a front side 102 of the smartphone 100. That is, a viewable side of the local display 204 is disposed on the front side 102 of the smartphone. In the exemplary embodiment illustrated, the local display 204 is framed by the housing 104.

The example smartphone 100 also includes other input interfaces 206 such as one or more buttons, keys or navigational input mechanisms. In the example illustrated, at least some of these additional input interfaces 206 are disposed for actuation at a front side 102 of the smartphone.

The example smartphone also includes a speaker 256. In the exemplary embodiment illustrated, the smartphone includes a single speaker 256 which is disposed vertically above the local display 204 when the smartphone 100 is held in a portrait orientation where its height is longer than its width. The speaker 256 may be disposed on the front face of the smartphone 100.

While the example smartphone 100 of Figure 2 includes a single speaker 256, in other exemplary embodiments, the smartphone 100 may include a greater number of speakers 256. For example, in at least some exemplary embodiments, the smartphone 100 may include a second speaker 256 which is disposed vertically below the local display 204 when the smartphone is held in a portrait orientation where its height is longer than its width (i.e. the orientation illustrated in Figure 2).

The example smartphone 100 also includes a microphone 258. In the example illustrated, the microphone 258 is vertically disposed below the local display 204 when the smartphone is held in the portrait orientation. The microphone 258 and at least one speaker 256 may be arranged so that the microphone is in close proximity to a user's mouth and the speaker 256 is in close proximity to a user's ear when the user holds the phone to their face to converse on the smartphone.

The example smartphone 100 also includes a front facing camera 253 which may be located vertically above the local display 204 when the smartphone 100 is held in a portrait orientation where its height is longer than its width. The front facing camera 253 is located so that it may capture images of objects which are located in front of or surrounding the front side of the smartphone 100.

The example smartphone 100 also includes an electromagnetic radiation source 257. The electromagnetic radiation source 257 is disposed on the front side 102 of the smartphone 100. In this orientation, electromagnetic radiation which is produced by the electromagnetic radiation source 257 may be projected onto objects which are located in front of or surrounding the front side of the smartphone 100. Such electromagnetic radiation (or the projection of electromagnetic radiation onto objects) may be captured on images obtained by the camera 253.

Referring now to Figure 3, a front view of an example electronic device 201, which in one example may be a tablet computer 300, is illustrated. The tablet computer 300 may include the components discussed above with reference to Figure 1 or a subset of those components. The tablet computer 300 includes a housing 304 which houses at least some of the components discussed above with reference to Figure 1.

The tablet computer 300 includes a local display 204, which may be a touchscreen which acts as an input interface 206. The local display 204 is disposed within the tablet computer 300 so that it is viewable at a front side 302 of the tablet computer 300. That is, a viewable side of the local display 204 is disposed on the front side 302 of the tablet computer 300. In the exemplary embodiment illustrated, the local display 204 is framed by the housing 304.

A frame 312 surrounds the local display 204. The frame 312 is portion of the housing 304 which provides a border around the local display 204. In at least some exemplary embodiments, the frame 312 is an active frame 312. That is, the frame has a touch sensitive overlay which allows the electronic device 201 to detect a touch applied to the frame thus allowing the frame 312 to act as an input interface 206 (Figure 1).

The exemplary tablet computer 300 includes a plurality of speakers 256. In the exemplary embodiment illustrated, the tablet includes two speakers 256. The two speakers 256 are disposed on opposing sides of the local display 204. More particularly, when the tablet computer 300 is held in a landscape orientation (such as the orientation illustrated in Figure 3) where its width is longer than its height, one of the two speakers is disposed on a right side 306 of the display 204 and one of the speakers is disposed on the left side 308 of the local display 204.

Both speakers 256 are disposed on the front side 302 of the tablet computer 300.

The exemplary tablet computer 300 also includes a microphone 258. In the example illustrated, the microphone 258 is vertically disposed below the local display 204 when the tablet computer is held in the landscape orientation illustrated in Figure 3. The microphone 258 may be located in other locations in other exemplary embodiments.

The exemplary tablet computer 300 also includes a front facing camera 253 which may be located vertically above the local display 204 when the tablet computer 300 is held in a landscape orientation (i.e. the orientation of Figure 3). The front facing camera 253 is located so that it may capture images of objects which are located in front of or surrounding the front side of the tablet computer 300.

The example tablet computer 300 also includes an electromagnetic radiation source 257. The electromagnetic radiation source 257 is disposed on the front side 304 of the tablet computer 300. In this orientation, electromagnetic radiation which is produced by the electromagnetic radiation source 257 may be projected onto objects which are located in front of or surrounding the front side 302 of the tablet computer 300. Such electromagnetic radiation (or the projection of electromagnetic radiation onto objects) may be captured on images obtained by the camera 253.

The tablet computer 300 may have the ability to run third party applications which are stored on the tablet computer.

The electronic device 201, which may be tablet computer 300, is usable by an end-user to send and receive communications using electronic communication services supported by a service provider.

The end-user of an electronic device 201 may send and receive communications with different entities using different electronic communication services. Those services may or may not be accessible using one or more particular electronic devices. For example, a communication source of an end-user's text messages sent and received by an end-user using a particular electronic device 201 having a particular memory module 230, such as a USIM, may be accessible using that device 201, but those text messages may not be accessible using another device having a different memory module. Other electronic communication sources, such as a web-based email account, may be accessible via a web-site using a browser on any internet-enabled electronic device.

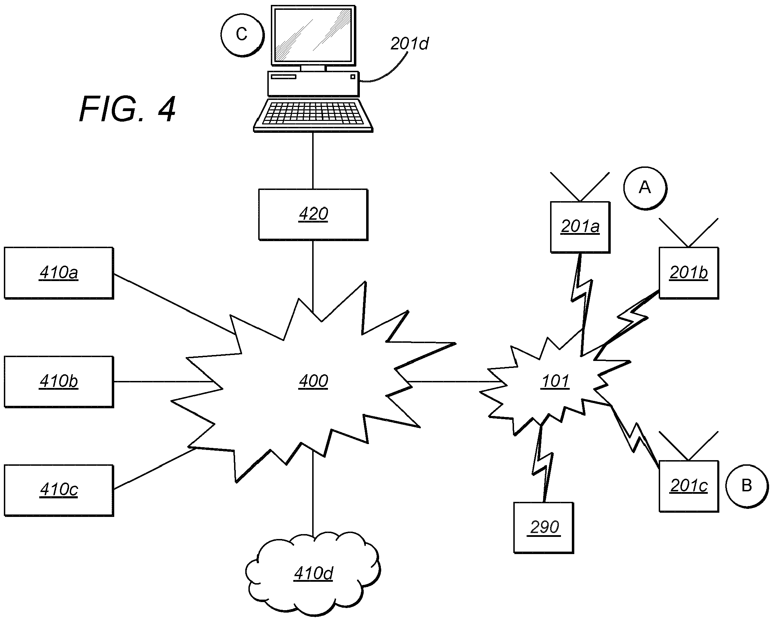

Figure 4 shows a system of networked apparatus by which electronic communications can be sent and received using multiple electronic devices 201 a, 201 b, 201 c. Referring to Figure 4, electronic devices 201 a, 201 b and 201 c are connected to wireless network 101 to perform voice and data communications, and to transmit data to an external display device 290 residing on the wireless network. Wireless network 101 is also connected to the Internet 400. Electronic device 201a may be a tablet computer of the similar to tablet computer 300 described in Figure 2 above. Electronic devices 201b and 201c may be smartphones. Electronic device 201d is a computing device such as a notebook, laptop or desktop, which is connected by a wired broadband connection to Local Area Network 420, and which is also connected to the Internet 400. Electronic devices 201a, b, c, d may access the Internet 400 to perform data communications therewith.

Servers 410a, 410b, 410c and 410d are also connected to the Internet 400 and one or more of them may individually or together support electronic communications services available to end-users of electronic devices 201a, 201 b, 201 c and 201 d, enabling them to send and receive electronic communications. Servers 410a, 410b, 410c and 410d may be web servers or communications servers, such as email servers.

Other servers and services may of course be provided allowing users of electronic devices 201a, 201 b, 201 c and 201 d to send and receive electronic communications by, for example, Voice over IP phone calls, video IP calls, video chat, group video chat, blogs, file transfers, instant messaging, and feeds.

Wireless network 101 may also support electronic communications without using Internet 400. For example, a user of smart phone 201 b may use wireless network 101 to make telephony calls, video calls, send text messages, send multimedia messages, and send instant messages to smart phone 201c, and to display application data on a display screen of the external display device 290, or control the display of application data.

The example shown in Figure 4 is intended to be non-limiting and additional network infrastructure may of course be provided, such as a Public Switched Telephone Network (not shown), which may be used, for example, to make telephony calls using smartphone 201 b to a wired phone (not shown).

In operation, the processor 240 modifies the application data according to a predetermined code to symbolise an operating status of the electronic device 201 in a display, and generates display data including components which are representative of the display objects defined by the modified application data before outputting the display data.

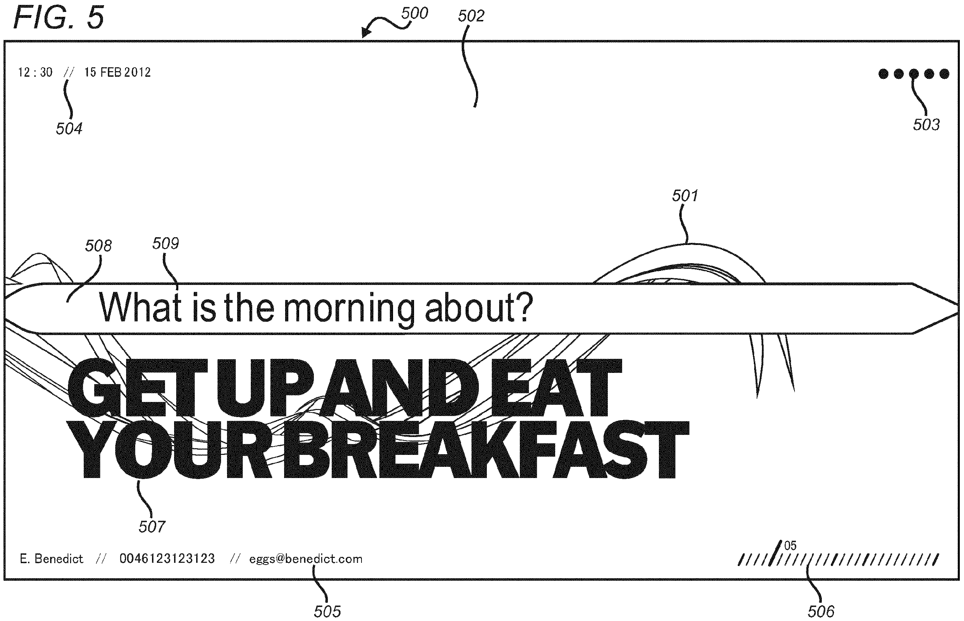

To explain the mode of operation, reference will now be made to Figure 5, which is a screenshot based on application data 227 which may be modified to symbolise the operating status of the electronic device 201.

Figure 5 shows a slide 500 which includes a number of display objects, numbered 501-510. The display objects include an ambient background element 501, a background 502, a number of dots 503, calendar information 504, contact information 505, a progress indicator 506, text 507, a ribbon 508, and text 509 within the ribbon 508. The slide 500 itself may also be referred to as a display object.

More particularly, the ambient background element 501 may be an animating ambient background. The parameters of this element could change to show the time spent on a slide, as well as the total time spent on the entire slideshow. The parameters that could change include colour, opacity, amount and thickness of strokes, frequency, amplitude, and speed.

The background 502 could also change depending on time, changing in colour, opacity, hue/saturation, and so on.

In one example, the dots 503 provide an abstract representation of the amount of emails (could be unified inbox notifications of Facebook data or even calls) received during the presentation.

The processor 240 communicates with the status report subsystem 268 to receive an indicator of the operating status of the electronic device 201.

In a first example, the processor 240 communicates with the clock subsystem 266 to receive an indicator of the current time value. Each of the display objects 500-510 has associated with it a visual parameter, and the first example takes the ambient background element 501, and a brightness parameter associated with it. During the presentation, the processor 240 modifies the brightness associated with the ambient background element 501 to symbolise an amount of time which is remaining until a preselected end point during the operation of the electronic device 201. In the first example, the preselected end point coincides with the final display of a predetermined display object defined by the application data 227, which in this example is the final slide (not shown) of the presentation, representing the end of the presentation. The processor 240 calculates the estimated amount of time which is remaining until the preselected end point based on the amount of time which has elapsed since the preselected start point and a predetermined duration. In this example, the predetermined duration is an expected duration input manually by the user before commencing the presentation. The processor 240 obtains the system time from the clock subsystem 266 at the start of the presentation, and periodically obtains the system time throughout the presentation. On each occasion the system time is obtained, the processor 240 performs a calculation to arrive at the amount of time remaining based on the amount of time which has elapsed since the start of the presentation and the expected duration of the presentation. Throughout the presentation, based on the periodic obtaining of the system time from the clock subsystem 266, the processor 240 modifies the brightness of the ambient background element 501 such that the brightness increases as the amount of time remaining decreases. This arrangement forms part of a code, which is known to the presenter, who is thereby able to gauge from the brightness of the ambient background element 501 roughly how much time is left, based on the expected duration. This results in the presenter being provided with an intuitive notification with respect to the time elapsed/remaining for the presentation.

The ambient background element 501 may appear in one, some or all of the slides of the presentation. In a variant, a different display object or visual parameter, or both, is varied in each slide to symbolise the amount of time remaining.

In a second example, the processor 240 communicates with the communication subsystem 211 to receive an indicator of the number of incoming messages being received by the electronic device 201, and modifies the application data 227 to symbolise the number of incoming messages. In this example, rather than modifying a visual parameter associated with an existing display object, the processor 240 modifies the application data 227 to define one or more further display objects which symbolise the operating status of the electronic device 201 in the display data, according to a predetermined code. More particularly, the processor 240 defines one or more display objects being dots 503 which together symbolise the number of incoming messages. Throughout the presentation, the processor 240 periodically obtains an indicator from the communication subsystem 211 of the number of incoming messages, and modifies the application data 227 to increase the number of dots as the number of messages increases. The number of messages per dot is specified by the code, and may be, for example, ten messages per dot. This is known to the presenter, who is thereby able to gauge from the number of dots how many message have been received by the electronic device 201 during the presentation (and therefore how many messages are awaiting a response).

In a third example, the processor 240 modifies the application data 227 to symbolise a level of remaining charge in the battery 238. In the third example, the processor 240 periodically obtains, throughout the presentation, an indicator from the battery interface 236 of the level of charge remaining in the battery 238, and modifies the application data 227 to vary the colour of the background 502 as the level of charge decreases. For example, the code may specify that the background remains blue whilst the level of charge in the battery is above 20%, and turns red when the level falls below 20%. The change may occur gradually, for example over the range 30% to 20%. The code is known to the presenter, who is thereby able to gauge from the colour of the background 502 how much charge is remaining in the battery 238 of the electronic device 201 during the presentation (e.g. whether the charge is in the range 30-100%, 20-30% or 0-20%).

In a fourth example, rather than the application data 227 being modified following its creation to symbolise the operating status of the electronic device 201, the application data 227 is set upon creation to symbolise the operating status.

In the fourth example, the application data is created such that the colour of a bullet point symbolises a next action to be performed by the electronic device 201. More particularly, the colour of a bullet point symbolises a type of display object which is to be displayed next, according to the application data 227. In the example, the predetermined code states that a red bullet point symbolises that the next action to be performed by the electronic device 201 upon receiving certain input from the user is to display a further bullet point within the same slide as the first. Alternatively, a blue bullet point symbolises that the next action to be performed by the electronic device 201 is to display the next slide in a series of slides forming a presentation. In this way, the presenter is able to determine what the next action will be, without the audience (who are not privy to the code) being alerted.

In a fifth example, the processor 240 modifies the application data according to a predetermined code to symbolise data from other applications in the form of notifications, such as from the calendar application, perhaps relating to an upcoming meeting that is about to start.

In this example, the processor 240 obtains data from the calendar application giving a number for the amount of time until the next meeting, which could be the number of minutes. The processor 240 uses this number to modify visual parameters in the application data such as the opacity of the ambient background element 501, or that of another ambient background effect. In one example of the predetermined code, the opacity when there is no upcoming meeting is 100%, but if there is an upcoming meeting in 60 minutes the opacity is 90%, and then reduces over time so that, when the next meeting is imminent, the ambient background effect is no longer visible, which serves as a clue for the presenter. In another example of the code, the opacity of the ambient background effect increases as the number of minutes until the start of the meeting decreases, so that the ambient background effect becomes more vibrant, instead of fading away.

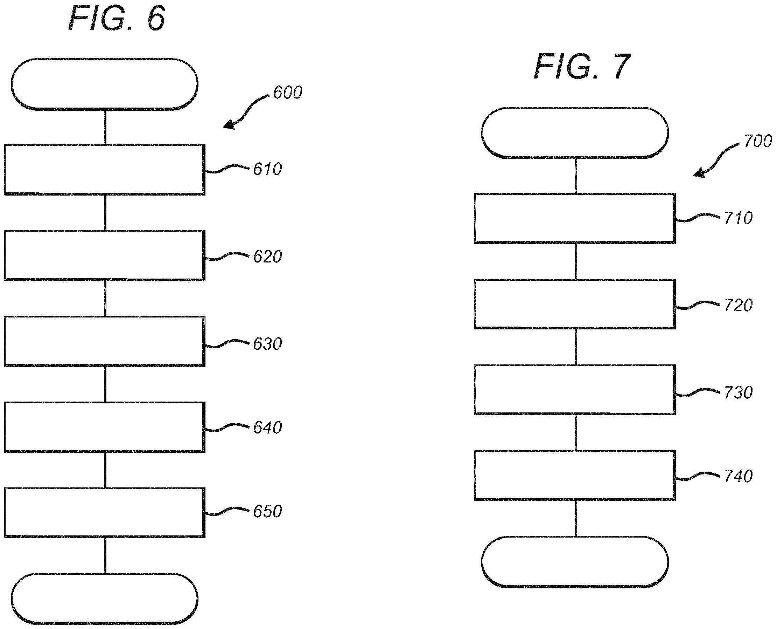

Figure 6 is a flow chart showing a method 600 for generating display data. The method comprises storing at block 610 application data in a memory, the application data defining one or more display objects; receiving at block 620 input via an input interface; operating at block 630 a processor in communication with the memory and input interface to modify the application data according to a predetermined code to symbolise an operating status of the device in display data; the processor generating at block 640 the display data including components which are representative of the display objects defined by the modified application data; and the processor outputting at block 650 the display data in accordance with the input.

Figure 7 is a flow chart showing another method 700 for generating display data. The method comprises storing at block 710 application data in a memory, the application data defining one or more display objects; receiving at block 720 input via an input interface; operating at block 730 a processor in communication with the memory and input interface to generate display data including components which are representative of the display objects defined by the application data, wherein the application data is set according to a predetermined code to symbolise the operating status of the device in the display data; and the processor outputting at block 740 the display data in accordance with the input.

## Claims

1. A device (201) for generating display data comprising:
memory (244) configured to store application data (227) defining one or more display objects (500-509);
an input interface (206) configured to receive input;
a processor (240) in communication with the memory (244) and input interface (206) and configured to output display data in accordance with the input;
the processor (240) being further configured to:
modify the application data (227) according to a predetermined code to symbolise an operating status of the device (201) in the display data; and
generate the display data including components which are representative of the display objects (500-509) defined by the modified application data (227), before outputting the display data.

2. The device (201) of claim 1, wherein the processor (240) is configured to modify the application data (227) to symbolise an amount of time which has elapsed since a preselected start point during the operation of the device (201), or an amount of time which is remaining until a preselected end point during the operation of the device (201).

3. The device (201) of claim 2, wherein the processor (240) is configured to calculate an estimated amount of time which is remaining until the preselected end point based on one or more of (i) calendar application data stored in the memory (244); (ii) the amount of time which has elapsed since the preselected start point and a predetermined duration; (iii) the number of display objects (500-509) defined by the application data (227) which are yet to be displayed, and a time estimate for the display of each display object (500-509); or (iv) the number of display objects (500-509) defined by the application data (227) which are yet to be displayed, and a record stored in memory (244) of an amount of time spent on one or more previously-displayed display objects (500-509).

4. The device (201) of claim 2 or 3, further comprising a clock subsystem (266), wherein the processor (240) is configured to communicate with the clock subsystem (266) to receive an indicator of a current time value, whereby the processor (240) calculates the amount of time which has elapsed since the preselected start point, or the amount of time which is remaining until the preselected end point.

5. The device (201) of any preceding claim, further comprising a communication subsystem (211, 262, 265), wherein the processor (240) is configured to communicate with the communication subsystem (211, 262, 265) to receive an indicator of a number of incoming messages received by the device (201), and wherein the processor (240) is configured to modify the application data (227) to symbolise the number of incoming messages.

6. The device (201) of any preceding claim, further comprising a battery (238), wherein the processor (240) is configured to modify the application data (227) to symbolise a level of remaining charge in the battery (238).

7. The device (201) of any preceding claim, wherein the processor (240) is configured to modify the application data (227) to symbolise in the display data a next action to be performed by the device (201).

8. The device (201) of claim 7, wherein the processor (240) is configured to modify the application data (227) to symbolise in the display data a type of display object (500-509) which is to be displayed next, according to the application data (227).

9. The device (201) of any preceding claim, wherein the processor (240) is configured to modify the application data (227) to define one or more further display objects (500-509) which symbolise the operating status of the device (201) in the display data, according to the predetermined code.

10. The device (201) of any preceding claim, wherein the processor (240) is configured to communicate with a status report module (268) to receive an indicator of the operating status of the device (201).

11. The device (201) of claim 10, wherein the processor (240) is configured to repeat a process of receiving the indicator from the status report module (268), modifying the application data (227), and outputting the display data, so as to provide an up-to-date symbolisation of the operating status in the display data.

12. The device (201) of any preceding claim, wherein each display object (500-509) has one or more associated visual parameters, wherein the visual parameters comprise one or more of a brightness, colour, contrast, opacity, frequency, amplitude or speed of the associated display object, or the number or thickness of a plurality of lines of the associated display object; and
wherein the processor (240) is configured to symbolise the operating status of the device (201) in the display data by modifying, according to the predetermined code, that application data (227) which relates to one or more of the visual parameters associated with at least part of one or more of the display objects (500-509).

13. A system comprising:
the device (201) of any preceding claim; and
a display device (204) configured to receive the display data from the processor (240) and generate a visual representation of the display data on a display screen.

14. A method for generating display data comprising
storing application data (227) in a memory (244), the application data (227) defining one or more display objects (500-509);
receiving input via an input interface (206);
operating a processor (240) in communication with the memory (244) and input interface (206) to modify the application data (227) according to a predetermined code to symbolise an operating status of the device (201) in display data;
the processor (240) generating the display data including components which are representative of the display objects (500-509) defined by the modified application data (227); and
the processor (240) outputting the display data in accordance with the input.

15. A computer program product comprising memory storing computer-executable instructions which, when executed by a processor, cause the processor to perform the method of claim 14.
